Europäisches Patentamt

European Patent Office

Office européen des brevets

(11) Publication number: **0 521 243 A1**

## EUROPEAN PATENT APPLICATION

(21) Application number: **92104635.5**

(22) Date of filing: **18.03.92**

(51) Int. Cl.⁵: **A01N 59/06**

(30) Priority: **05.07.91 JP 191115/91**

(43) Date of publication of application:
**07.01.93 Bulletin 93/01**

(84) Designated Contracting States:
**AT BE CH DE ES FR GB IT LI LU NL SE**

(71) Applicant: **MITSUI NORIN CO., LTD.**
**1-20, 3-chome, Nihonbashimuromachi**
**Chuo-ku**
**Tokyo(JP)**

(72) Inventor: **Hara, Yukihiko**
**2-7, Minamisurugadai 2-chome**
**Fujieda-shi, Shizuoka-ken(JP)**
Inventor: **Okada, Fumio**
**No. 3187, Kanaya, Kanaya-cho**
**Haibara-gun, Shizuoka-ken(JP)**

(74) Representative: **Türk, Gille, Hrabal, Leifert**
**Brucknerstrasse 20**
**W-4000 Düsseldorf 13(DE)**

(54) **Pesticide for mollusks.**

(57) A pesticide for mollusks comprising an aluminum compound or its hydrolysate as an effective ingredient.

When the pesticide for mollusks of the present invention is brought into contact with mollusks (especially the upper half of the body), the aluminum compound as the effective ingredient permeates into the body of mollusks, regardless of whether the mollusk feeds the pesticide or not, and the mollusk comes to death. The aluminum compound which is the effective component of the pesticide for mollusks of the present invention does not adversely affect, has no harm to human and beast and can easily be handled.

EP 0 521 243 A1

BACKGROUND OF THE INVENTION

FIELD OF THE INVENTION

The present invention relates to a pesticide for mollusks and particularly, to a pesticide for mollusks comprising as an effective ingredient an aluminum compound or its hydrolysate. More particularly, the present invention relates to a pesticide for gastropod mollusks like terrestrial animals such as slugs, snails, etc., aquatic or marine animals such as mud snails, barnacles, etc.

DESCRIPTION OF THE PRIOR ART

Slugs, snails, etc. which are terrestrial gastropod mollusks increase by feeding agricultural crops and are serious vermin of leaf vegetables, greens and fruits, rootcrops, flowering plants, tobaccos, mushrooms, etc. In order to control these mollusk plagues caused by slugs, snails, etc., a variety of exterminating methods have been proposed. For example, a method which comprises applying lead arsenate or yellow phosphorus agents to feed to poison mollusks or trap them to death, a method which comprises shielding crops with a copper wire, etc. have been proposed. However, the use of agricultural chemicals has now been restricted and hence, a method for trapping mollusks to death with chemicals comprising metaldehyde as a main component has been often used. Mollusks such as mud snails feed crops grown in a paddy field and marine mollusks such as acorn shells adhere to the bottom of a ship or to a fishing net, which are serious problems. Thus, it has been desired to develop repellents to these harmful mollusks.

However, the chemicals comprising metaldehyde as the main component involves a problem that reduction in potency by rain, water or high humidity is not avoidable and in addition thereto, are fatally defective in that these chemicals are not effective, unless slugs or snails feed them. On the other hand, it has been strongly desired for aquatic mollusks to develop safe pesticides free of environmental pollution which are not harmful to human and beast.

SUMMARY OF THE INVENTION

In order to solve these problems, the present inventors have pursued a substance which is not harmful to human, beast and plant, and imparts an effect of repelling slugs or snails to exterminate them and as a result, aluminum compounds can exhibit the desired effect. The present invention has thus been accomplished.

That is, the present invention relates to a pesticide for mollusks comprising an aluminum compound or its hydrolysate as an effective ingredient.

DETAILED DESCRIPTION OF THE PREFERRED EMBODIMENTS

The aluminum compounds which can be used in the present invention are not particularly limited but are preferably water-soluble. More preferred compounds are those acceptable as food additives. Specific examples include aluminum sulfate (alum), potassium aluminum sulfate (burnt alum), aluminum ammonium sulfate, aluminum nitrate, aluminum sodium sulfate, basic aluminum acetate, aluminum polychloride, chlorohydrol and hydrates thereof. These aluminum compounds are used as food additives and are used generally as aqueous solutions by dissolving these compounds in a suitable amount of water.

An amount of the aluminum compound used may be appropriately chosen from the range that can attain a sufficient effect of exterminating mollusks. Where the aluminum compound is used in the form of its aqueous solution, the amount is generally in the range of 0.5 to 10.0% (weight ratio), preferably in the range of 1.0 to 2.0% (weight ratio).

The pesticide for mollusks of the present invention comprising the aluminum compound as an effective ingredient is used generally in the form of an aqueous solution. However, the aluminum compound may also be used in the form of powder or granules by formulating conventional carriers, etc. therein.

When the pesticide for mollusks of the present invention is applied to mollusks such as slugs or snails by sprinkling the pesticide thereon, the pesticide acts on the body of vermin to make them dead instantaneously. Even though the vermin escape, they will be dead in a very short period of time. It was also observed that, when the pesticide is permeated into cloth materials, etc. and the materials are put at a place where these mollusks creep, they are repelled when the materials are in contact with the mollusks.

A mechanism of the pesticide of the present invention on mollusks is considered as follows. Where the mollusks is, for example, a slug, the pesticide is applied or sprinkled over the surface of a slug, the aluminum compound as its effective ingredient would permeate through the upper half of mollusk into its body from a part considered to be respiratory holes, whereby the slug comes to death. Where the pesticide is applied to the tail of mollusk such as a slug, the slug is driven to a drastic escape behavior but when the upper half is immersed in the pesticide, the slug comes to death in a short time or even though it escapes, the slug is finally dead. On the other hand, where the mollusk is a snail, it is most effective to apply the pesticide to the snail while it is creeping. Once the snail is in contact with the pesticide, the snail foams and comes to death even though the body is hidden into the shell.

Therefore, unlike conventional agents for trapping vermin to death on pesticides, the pesticide for mollusks of the present invention exhibits its effects by bringing the pesticide in contact with the mollusks, especially with the upper half of the mollusks, irrespective of whether the mollusks such as slugs or snails feed or not. It is considered that such effects would also be exhibited similarly on aquatic mollusks.

Upon application of the pesticide in accordance with the present invention, the aluminum compound is prepared into liquid and the liquid is sprayed or coated on such a place that is desired to exterminate mollusks. Alternatively, the pesticide may be prepared into a solid and the solid may be used directly or by blending with other materials.

In the pesticide of the present invention, the aluminum compound as the effective ingredient is gradually eluted by sprinkling or rain water, etc. Therefore, it is also possible to bring the pesticide in contact with terrestrial mollusks such as slugs or snails to exterminate them. For aquatic mollusks, the pesticide of the present invention is directly sprayed onto plants, etc. or blended with materials for a fishing net or paints for coating the bottom of a ship, whereby the terminating effect can be expected.

Hereafter the present invention will be described in more detail.

Example 1

The aluminum compound was prepared into aqueous solutions of 0.5%, 1.0% and 2.0%. Slugs were put in a Petri dish having a diameter of 9 cm and 1 ml each of the aqueous solutions was dropwise applied to the slugs from upwards to examine the function and effect brought by difference in concentration. When the slugs crept out of the Petri dish, it was judged as escape. Where the slugs were alive for 60 minutes or longer, it was judged as being alive (ineffective). The results are shown in Table 1.

Table 1.  Effect of aluminum compound aqueous
solution on slug

Test on two stripe slug

| Aluminum compound | Concent-ration (%) | Number of slug | Dead or alive | Observation |
|---|---|---|---|---|
| Potassium aluminum sulfate | 0.5 | 2 | dead 2 | Impossible to move in 30 mins. |
| Potassium aluminum sulfate | 1.0 | 2 | dead 2 | After escape at about 10 cm, one was dead. |
| Potassium aluminum sulfate | 2.0 | 2 | dead 2 | After escape at about 15 cm, one was dead. |
| Aluminum poly-hydroxy chloride | 0.5 | 2 | dead 0 | Escaped |
| Aluminum poly-hydroxy chloride | 1.5 | 2 | dead 2 | After escape at about 20 cm, one was dead. |
| Aluminum poly-hydroxy chloride | 2.0 | 2 | dead 2 | |
| Aluminum nitrate | 0.5 | 2 | dead 2 | Impossible to move in 10 mins. |
| Aluminum nitrate | 1.0 | 2 | dead | All were dead in 20 minutes. |
| Aluminum nitrate | 2.0 | 2 | dead | All were dead in 10 minutes. |

4

Table 1 (cont'd)

Test on two stripe slug

| Aluminum compound | Concentration (%) | Number of slug | Dead or alive | Observation |
|---|---|---|---|---|
| Sodium aluminum sulfate | 0.5 | 2 | alive 1<br>dead 1 | One escaped by 2 m or farther. |
| Sodium aluminum sulfate | 1.0 | 2 | dead 2 | After escape at about 30 cm, one was dead. |
| Sodium aluminum sulfate | 2.0 | 2 | dead 2 | Impossible to move in 20 mins. |
| Aluminum ammonium sulfate | 0.5 | 2 | dead 2 | After escape at about 25 cm, one was dead. |
| Aluminum ammonium sulfate | 1.0 | 2 | dead 2 | After escape at about 40 cm, one was dead. |
| Aluminum ammonium sulfate | 2.0 | 2 | dead 2 | Impossible to move in 10 minutes. |
| Potassium aluminum sulfate (burnt) | 0.5 | 2 | dead 2 | Two were alive for 50 mins. or longer; one escaped at 25 cm. |
| Potassium aluminum sulfate (burnt) | 1.0 | 2 | dead 2 | Two were alive for about 30 mins. or longer. |
| Potassium aluminum sulfate (burnt) | 2.0 | 2 | dead 2 | Burnt alum was not all dissolved but emulsified. |

Example 2

   Based on the results obtained in Example 1 and taking into account cost performance, effect and influence on plant, etc., each of the aluminum compounds was prepared into 2% aqueous solution and its pH was examined. The results are shown in Table 2.

Table 2.  pH of Aqueous Solution of Various
Aluminum Compounds

| Compound | pH Value | Note |
|---|---|---|
| Potassium aluminum sulfate | 3.54 | |
| Aluminum poly-hydroxy chloride | 4.46 | |
| Aluminum sulfate | 3.26 | |
| Sodium aluminum sulfate | 3.38 | |
| Aluminum ammonium sulfate | 3.34 | |
| Potassium aluminum sulfate (burnt) | 3.35 | |
| Basic aluminum acetate | 9.82 | All were not dissolved but emulsified. |

Example 3

Each of the aluminum compounds was prepared into 2% aqueous solution and the pesticidal effect on slugs was examined. That is, slugs were put in a Petri dish and 1-2 ml each of the aqueous solutions was dropwise applied to the slugs from upwards to examine the effect in 5 minutes or longer, in a manner similar to Example 1. The results are shown in Table 3.

Table 3

| Effect on slug | | | |
|---|---|---|---|
| Compound | Test on two stripe slug | | |
| | Number of slug | Dead or alive | Observation |
| | | 5 mins. | 5 mins. | |
| Potassium aluminum sulfate | 5 | 4 | 1 | |
| Aluminum polyhydroxy chloride | 2 | 1 | 1 | |
| Aluminum sulfate | 5 | 3 | 2 | Impossible to move at the place where the chemical applied to the slugs. |
| Sodium aluminum sulfate | 5 | 3 | 2 | Impossible to move at the place where the chemical applied to the slugs. |
| Aluminum ammonium sulfate | 2 | 0 | 2 | |
| Basic aluminum acetate | 5 | 0 | 5 | |

Example 4

With respect to the 5 preparations described in Example 3 except for basic aluminum acetate which

6

was difficultly soluble, the function and effect on thin shell snails were examined. The method was as follows. The snails were put in a Petri dish and at the time when they crept out, 0.5 ml each of the test solution was dropwise applied to the snails and their behaviors were observed. The results are shown in Table 4. On the day following the test, all were dead other than the two moved.

Table 4

| Effect on snail | | | | |
|---|---|---|---|---|
| Compound | Concentration (%) | Number of snail | Observation | |
| | | | The day | Next day |
| Potassium aluminum sulfate | 2.0 | 2 | Vanished in shell with foam. | One moved. |
| Aluminum polyhydroxy chloride | 2.0 | 1 | Vanished in shell with foam. | Discharged putrid liquid. |
| Aluminum sulfate | 2.0 | 2 | 2 mins. after, the head was protruded while struggling and then vanished into shell. | Two discharged putrid liquid. |
| Sodium aluminum sulfate | 2.0 | 2 | Vanished in shell with foam but the foam was less than | Discharged viscous substance in about 15 mins but the two moved. |
| Aluminum ammonium sulfate | 2.0 | 2 | Vanished in shell with foam. | Discharged viscous substance 15 mins. after but the two did not move. |

When the pesticide for mollusk of the present invention is brought into contact with mollusk (especially the upper half of the body), the aluminum compound as the effective ingredient permeates into the body of mollusks, regardless of whether the mollusk feeds the pesticide or not, and the mollusk comes to death. The aluminum compound which is the effective component of the pesticide for mollusks of the present invention does not adversely affect, has no harm to human and beast and can easily be handled.

While the invention has been described in detail and with reference to specific embodiments thereof, it is apparent to one skilled in the art that various changes and modifications can be made therein without departing from the spirit and the scope of the invention.

**Claims**

1. A pesticide for mollusks comprising as an effective ingredient an aluminum compound or a hydrolysate thereof.

2. A pesticide for mollusks as claimed in claim 1, wherein said aluminum compound is water-soluble.

3. A pesticide for mollusks as claimed in claim 2, wherein said aluminum compound is selected from the group consisting of aluminum sulfate (alum), potassium aluminum sulfate (burnt alum), aluminum ammonium sulfate, aluminum nitrate, aluminum sodium sulfate, basic aluminum acetate, aluminum polychloride, chlorohydrol and a hydrate thereof.

4. A pesticide for mollusks as claimed in claim 2, wherein said aluminum compound is used in an amount of 0.5 to 10.0 (weight ratio).

5. A pesticide for mollusks as claimed in claim 4, wherein said aluminum compound is used in an amount of 1.0 to 2.0 (weight ratio).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 008 471 (GROWING SUCCESS ORGANIC LTD) <br> * claims * | 1-5 | A01N59/06 |
| X | EP-A-0 173 410 (SAMPSON) <br> * page 2, line 12, paragraph 14 * <br> * claims * | 1-5 | |
| X | US-A-4 765 979 (J.W.NIELSEN) <br> * claims * | 1-5 | |
| X | EP-A-0 306 160 (NATIONAL RESEARCH DEVELOPMENT CORPORATION) <br> * claims * | 1-5 | |
| X | CHEMICAL ABSTRACTS, vol. 111, no. 5, 31 July 1989, Columbus, Ohio, US; abstract no. 35122d, I.F. HENDERSON ET AL. 'A new group of molluscidal compounds' page 215 ;column R ; * abstract * & MONOGR. - BR. CROP PROT. COUNC. vol. 41, 1989, pages 289 - 294 | 1-5 | TECHNICAL FIELDS SEARCHED (Int. Cl.5 ) <br><br> A01N |

The present search report has been drawn up for all claims

| Place of search | Date of completion of the search | Examiner |
|---|---|---|
| THE HAGUE | 20 OCTOBER 1992 | DALKAFOUKI A. |